Europäisches Patentamt

European Patent Office

Office européen des brevets

(19)

(11) Veröffentlichungsnummer: **0 060 900**
B1

# EUROPÄISCHE PATENTSCHRIFT

(12)

(45) Veröffentlichungstag der Patentschrift:
24.10.84

(21) Anmeldenummer: 81102053.6

(22) Anmeldetag: 19.03.81

(51) Int. Cl.³: **F 21 Q 1/00, B 60 Q 1/26**

(54) **Mehrkammerleuchte für Fahrzeuge.**

(43) Veröffentlichungstag der Anmeldung:
29.09.82 Patentblatt 82/39

(45) Bekanntmachung des Hinweises auf die Patenterteilung:
24.10.84 Patentblatt 84/43

(84) Benannte Vertragsstaaten:
**DE FR GB IT SE**

(56) Entgegenhaltungen:
**DE - A - 2 441 330**
**DE - A - 2 602 237**

(73) Patentinhaber: **Westfälische Metall Industrie KG Hueck & Co., Postfach 28 40, D-4780 Lippstadt (DE)**

(72) Erfinder: **Bärtl, Richard, Okerweg 23, D-4780 Lippstadt 8 (DE)**

## Beschreibung

Die Erfindung bezieht sich auf eine Mehrkammerleuchte für Fahrzeuge mit einem einteiligen Lampenträger aus Blech, dessen Glühlampen aufnehmende Öffnungen zusammen mit den Glühlampensockel umgebenden Fassungskörpern, die unmittelbar an ein einteiliges Gehäuse, an einen Reflektorkörper oder an eine rückwärtige Leuchtenabdeckung angeformt sind, Glühlampenfassungen bilden, wobei zur Bildung einer Soll-Dehnstelle zwischen weit auseinanderliegenden Glühlampenfassungen der Lampenträger durch Freischnitte in zwei Abschnitte unterteils ist, die einstückig untereinander über zwei U-förmige, dehnbare Teile verbunden sind.

Bei dem in der DE-A Nr. 2602237 dargestellten Ausführungsbeispiel ist die Soll-Dehnstelle durch Freistanzen des Lampenträgers bis auf eine haarnadelartige Schleife gebildet. Diese schleifenförmige Bahn ist sehr schmal gehalten, damit sich das Biegemoment beim Anpassen des Lampenträgers an den die Fassungskörper tragenden Bauteil der Leuchte sehr klein stellt. Diese Ausführungsform hat sich von der fertigungstechnischen Seite her bestens bewährt. Da jedoch der für alle Glühlampen gemeinsame Lampenträger auch die gemeinsame Masseleitung darstellt, darf der Querschnitt der Soll-Dehnstelle nicht beliebig klein ausgeführt werden, da hier sonst ein zu grosser elektrischer Widerstand entstehen würde.

Aufgabe der Erfindung ist es, die Soll-Dehnstelle so auszubilden, dass sie eine grosse Querschnittsfläche aufweist, aber trotzdem das zur Veränderung der Abstandsmasse zwischen den die Glühlampen aufnehmenden Öffnungen im Lampenträger aufzuwendende Biegemoment klein ist.

Diese Aufgabe wird erfindungsgemäss dadurch gelöst, dass die beiden parallelen Schenkel jeden U-förmigen Teiles in Richtung der gewünschten Dehnung des Lampenträgers weisen und der die beiden Schenkel jeweils verbindende Steg zumindest nahezu rechtwinklig aus der Ebene des Lampenträgers herausgebogen ist. Dadurch wird erreicht, dass die die Soll-Dehnstelle bildende Bahn um eine durch die Blechstärke vorgegebene Kante gebogen wird, so dass sich das Biegemoment bei Verbreiterung der Bahn nur unwesentlich erhöht.

Die Zeichnung veranschaulicht ein Ausführungsbeispiel den Erfindung, und zwar zeigt:

Fig. 1 die beiden Enden einer im Schnitt dargestellten Mehrkammerleuchte, und

Fig. 2 einen Lampenträger mit zwei Soll-Dehnstellen, während

Fig. 3 einen Schnitt nach der Linie A-A durch den Lampenträger darstellt.

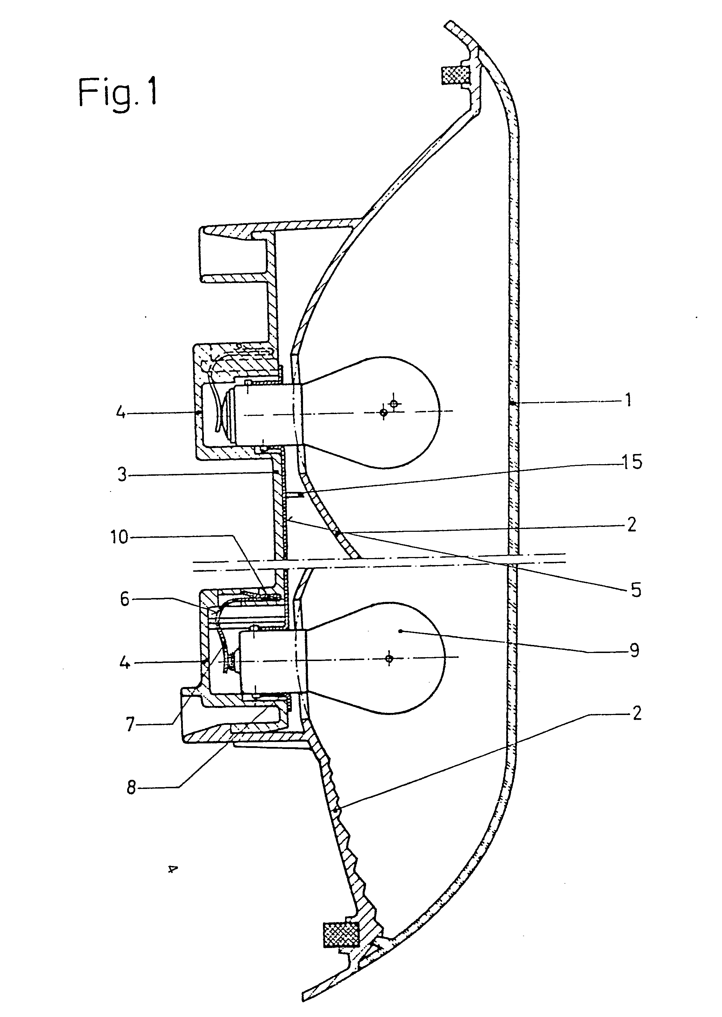

Die in Fig. 1 dargestellte Leuchte besteht im wesentlichen aus einer ein- oder mehrteiligen Lichtscheibe 1, einem die Leuchte in mehrere Kammern unterteilenden Reflektorkörper 2, einem einteiligen Lampenträger 5 und einer einteiligen rückwärtigen Leuchtenabdeckung 3, an die gleichzeitig ein Fassungskörper 4 der Lampenfassungen angeformt ist. Aus dem Lampenträger 5 sind Lappen 8 rechtwinklig herausgestellt, die in die Fassungskörper 4 hineinragen und zusammen mit diesen die Lampenfassungen bilden. Die Glühlampen 9 werden von dem freien Ende 7 einer der Kontaktfedern 6 mit ihren Sockelstiften gegen die hochgestellten Lappen 8 gepresst. Hierdurch ist eine elektrische Verbindung zwischen dem Glühlampensockel und dem Lampenträger 5 hergestellt. Die elektrische Zuleitung zu dem Mittelpol der Glühlampen erfolgt über die Kontaktfedern 6, die mit ihrem freien Ende unter Vorspannung auf den Mittelkontakt aufliegen und mit ihrem anderen Ende 10 an die elektrischen Zuleitungen angeschlossen sind.

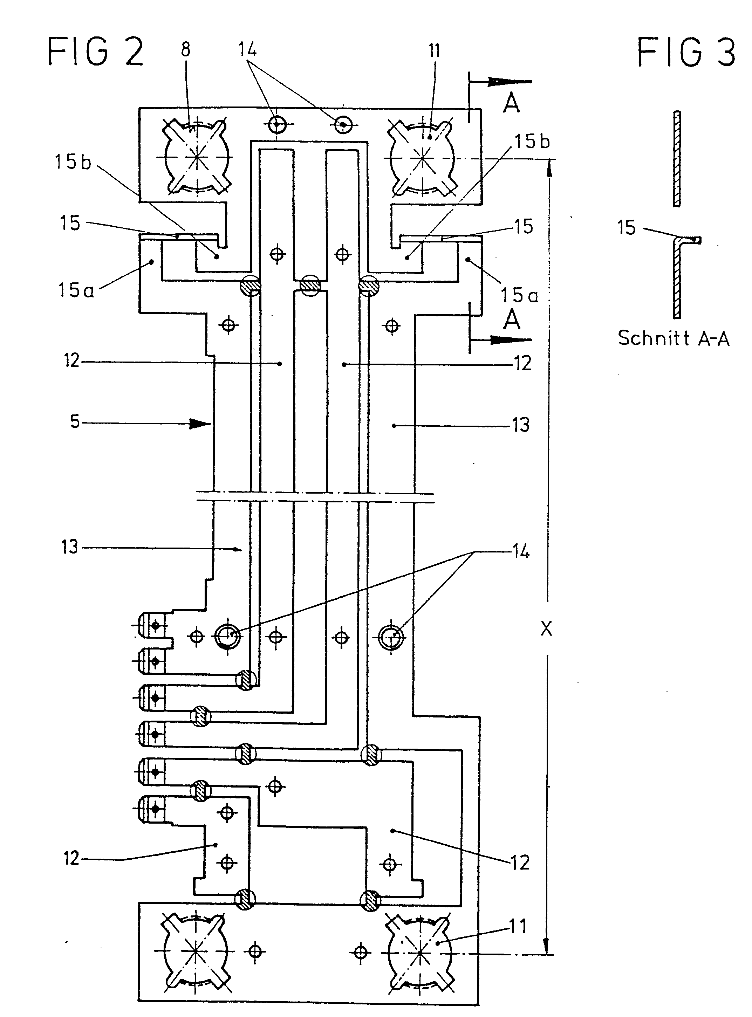

Die elektrische Zuleitung kann gebildet sein aus einzelnen Kabeln oder aus Leiterbahnen, die aus dem Lampenträger herausgestanzt sind. Diese Leiterbahnen werden von der rückwärtigen Leuchtenabdeckung 3 getragen und sind mit dieser mechanisch verbunden. Die Leuchtenabdeckung 3 ist aus Isolierstoff, z.B. Kunststoff, hergestellt, so dass eine Isolation der einzelnen Leiterbahnen untereinander gewährleistet ist. Die Kombination mit aus dem Lampenträger freigestanzten Leiterbahnen ist sehr vorteilhaft, weil zu den eingangs genannten Vorteilen auch noch die Einsparung der Verkabelung zwischen einem Mehrfachstecker und den einzelnen Lampenfassungen hinzukommt. Ein derartiger Lampenträger mit ausgestanzten Leiterbahnen als Stromzuleitungen zu den einzelnen Glühlampen ist in Fig. 2 dargestellt. Dieser Lampenträger zeigt je zwei an den ortsfesten Enden angeordnete Öffnungen 11 des Lampenträgers zur Aufnahme der Glühlampen 9. Aus dem Rand dieser Öffnungen ragen die Lappen 8 heraus, die rechtwinklig umgestellt sind. Die Leiterbahnen 12 dienen der Stromzuleitung zum Mittelkontakt der Glühlampen, während die Leiterbahnen 13 die für alle Glühlampen gemeinsame Masseleitung darstellen. Da das Mass X zwischen den Öffnungen 11 sehr gross ist und dadurch bedingt das Mass in der rückwärtigen Abdeckung 3 mit den angeformten Fassungskörpern 4 nur schwer exakt einzuhalten ist, muss eine Ausgleichsmöglichkeit zwischen dem Mass X bei dem Lampenträger 5 und dem Mass X bei den Fassungskörper 4 gegeben sein. Diese Ausgleichsmöglichkeit ist bei der in Fig. 2 gezeigten Lösungsmöglichkeit durch das Freistanzen des Lampenträgers 5 bis auf eine U-förmige verlaufende Bahn 15, 15a, 15b geschaffen, bei der der Steg 15, welcher die beiden parallel und in Richtung der gewünschten Dehnung verlaufenden Schenkel 15a, 15b miteinander verbindet, rechtwinklig aus der Ebene des Blechlampenträgers herausgebogen ist. Beim Strecken oder beim Kürzen des Masses X wird der Steg 15 in dem Bereich zwischen den beiden Schenkeln 15a und 15b gebogen. Dabei ist der rechteckige Querschnitt des zu biegenden Schenkels so gelagert, dass der Schenkel 15 über die kleine Kante, deren Länge durch die Blechstärke vorgegeben ist, gebogen wird. Dadurch stellt sich das Biegemoment selbst bei einer grossen Breite der U-förmig verlaufenden Bahn sehr klein.

Beim Verbinden des Lampenträgers 5 mit der rückwärtigen Leuchtenabdeckung 3 greifen Stifte, die an die rückwärtige Abdeckung 3 angeformt sind, in Bohrungen 14 des Lampenträgers ein und gleichen somit Unterschiede zwischen dem Abstand der Fassungskörper 4 und dem Abstand der Öffnungen 11 im Lampenträger aus.

## Patentanspruch

Mehrkammerleuchte für Fahrzeuge mit einem einteiligen Lampenträger (5) aus Blech, dessen Glühlampen (9) aufnehmende Öffnungen (11) zusammen mit den Glühlampensockel umgebenden Fassungskörpern (4), die unmittelbar an ein einteiliges Gehäuse, an einen Reflektorkörper (2) oder an eine rückwärtige Leuchtenabdeckung (3) angeformt sind, Glühlampenfassungen bilden, wobei zur Bildung einer Soll-Dehnstelle zwischen weit auseinanderliegenden Glühlampenfassungen der Lampenträger (5) durch Freischnitte in zwei Abschnitte unterteilt ist, die einstückig untereinander über zwei U-förmige, dehnbare Teile verbunden sind, dadurch gekennzeichnet, dass die beiden parallelen Schenkel (15a, 15b) jeden U-förmigen Teiles in Richtung der gewünschten Dehnung des Lampenträgers (5) weisen und der die beiden Schenkel (15a, 15b) jeweils verbindende Steg (15) zumindest nahezu rechtwinklig aus der Ebene des Lampenträgers (5) herausgebogen ist.

## Revendication

Bloc optique compartimenté pour véhicule, comprenant un porte-lampes (5) en une seule pièce de tôle, dont les ouvertures (11) recevant les lampes à incandescence (9) constituent des douilles avec les corps de douille (4) formés directement sur un corps en une seule pièce, un réflecteur (2) ou une paroi arrière (3), et dans lequel le porte-lampes (5) est divisé par des découpes en deux segments que deux pièces ductiles en U relient en une seule pièce pour former un point théorique de dilatation entre deux douilles très éloignées, ledit bloc optique étant caractérisé en ce que les deux branches parallèles (15a, 15b) de chaque pièce en U sont orientées dans le sens de la dilatation souhaitée du porte-lampes (5) et la barrette (15) reliant les deux branches (15a, 15b) est repliée au moins à peu près perpendiculairement au plan du porte-lampes (5).

## Claim

Light cluster for vehicles, having a one-piece bulb support (5) which is made of sheet metal and whose openings (11) accommodating incandescent light bulbs (9), together with socket elements (4) surrounding the bulb caps and formed directly onto a one-piece housing, onto a reflector element (2) or onto a rear light cover (3), form incandescent light bulb holders and to form a predetermined expansion region between incandescent light bulb holders situated far apart from one another, the bulb support (5) is subdivided by punching into two sections which are connected to one another integrally by means of two U-shaped expansible portions, characterised in that the two parallel legs (15a, 15b) of each U-shaped portion are directed in the direction of the intended expansion of the bulb support (5), and the web (15) which connects each two legs (15a, 15b) to one another is bent out of the plane of the bulb support (5) at least approximately at right angles.

Fig.1

0 060 900

FIG 2

FIG 3

8

14

11

A

15 b

15 b

15

15

15 a

15 a

15

12

12

Schnitt A-A

5

13

13

14

12

12

11

X